# EUROPÄISCHE PATENTSCHRIFT

(11) **EP 2 900 494 B1**
(45) Veröffentlichungstag und Bekanntmachung des Hinweises auf die Patenterteilung: **06.06.2018**
(21) Anmeldenummer: 13744566.4
(22) Anmeldetag: 01.08.2013
(51) Int. Cl.: B60G 3/14, B60G 3/18, B60G 3/20, B60G 3/22

(54) **EINZELRADAUFHÄNGUNG EINES RADES EINES ZWEISPURIGEN FAHRZEUGS MIT EINEM SCHERENLENKER**
INDEPENDENT SUSPENSION OF A WHEEL OF A VEHICLE WITH A SCISSORS-LIKE ARM
SUSPENSION INDÉPENDANTE D'UNE ROUE D'UN VEHICULE AVEC UN BRAS EN FORME DE CISEAUX

(30) Priorität: 25.09.2012 DE 102012217264
(43) Veröffentlichungstag der Anmeldung: 05.08.2015
(73) Patentinhaber: Bayerische Motoren Werke Aktiengesellschaft, 80809 München (DE)
(72) Erfinder: GIELISCH, Sebastian, 85716 Unterschleissheim (DE); KÖNIG, Roland, 82392 Habach (DE); LADSTÄTTER, Martin, 85232 Bergkirchen (DE); PRUCKNER, Alfred, 81545 Muenchen (DE); SCHLICHTE, Dirk, 80469 Muenchen (DE)
(86) Internationale Anmeldenummer: PCT/EP2013/066228
(87) Internationale Veröffentlichungsnummer: WO 2014/048622

(56) Entgegenhaltungen:
- EP-A1- 0 001 344
- EP-A2- 0 754 575
- WO-A1-2011/072967
- FR-A- 846 448
- US-A- 5 620 173
- US-A- 6 045 317
- US-A1- 2008 185 807

## Beschreibung

Die Erfindung betrifft eine Einzelradaufhängung eines Rades eines zweispurigen Fahrzeugs nach dem Oberbegriff des Anspruchs 1. Zum Stand der Technik wird neben der WO 2011/072967 auf die US 5,620,173 verwiesen.

Einzelradaufhängungen der erfindungsgemäßen Art kommen insbesondere bei Hinterachsen von Personenkraftwagen zum Einsatz. Bei diesen Hinterachsen sind die Räder üblicherweise nicht lenkbar und haben entsprechend bekanntlich einen großen Einfluss auf die Fahrstabilität und Fahrsicherheit des Fahrzeugs. Um in möglichst allen Fahrsituationen ein stabiles Fahrverhalten zu erreichen, sind moderne Hinterachsen kinematisch so ausgelegt, dass sie über den Einfederweg einen negativen Radsturzwinkel erzeugen. Der negative Radsturzwinkel dient zur Maximierung der übertragbaren Seitenkräfte relativ zum Fahrzeugaufbau bzw. zur Karosserie. Außerdem ist kinematisch über den Einfederweg des Rades gegenüber dem Fahrzeugaufbau sowie elastokinematisch unter auf das Rad einwirkender Längskräfte (insbesondere durch Abbremsen) ein Vorspurwinkel am Rad gewünscht, um ein untersteuerndes Fahrverhalten zu erzeugen und ein plötzliches Ausbrechen des Hecks bei Lastwechsel zu verhindern. Für ein derartiges Verhalten ergeben sich heutzutage relativ aufwändige Achskonstruktionen beispielsweise in Form von Fünflenkerachsen oder Schräglenkerachsen. Jedoch haben diese Achskonstruktionen neben hohen Kosten den weiteren Nachteil, dass sie einen hohen Bauraumbedarf aufweisen. Demgegenüber etwas günstiger sind die ebenfalls bekannten Verbundlenkerachsen, die jedoch gewisse Nachteile im fahrdynamischen Verhalten aufweisen.

Aus WO 2011/072967 ist eine Einzelradaufhängung eines nicht lenkbaren Rades eines zweispurigen Fahrzeugs bekannt, bei der ein Längslenker an seinem bezogen auf die Fahrtrichtung hinteren Endbereich ein zugehöriges Rad stützt. Der Längslenker ist ferner an seinem vorderen Endbereich am Fahrzeugaufbau mittels eines Pendellenkers angelenkt und in seinem Mittelbereich mittels eines Scherenlenkers am Fahrzeugaufbau angelenkt.
Die eingangs weiterhin genannte US 5,620,173 zeigt die Merkmale des Oberbegriffs des Anspruchs 1 in Form einer sog. doppeltwirkenden vibrationssicheren Struktur mit verteiltem Druck, die angeblich zwischen dem Aufbau und der Achse eines Fahrzeugs vorgesehen sein kann.

Der vorliegenden Erfindung liegt die Aufgabe zugrunde eine Einzelradaufhängung zu schaffen, die einen besonders kleinen Bauraum erfordert und dennoch zu einer präzisen Radführung mit den geforderten Winkeln führt, um insbesondere in möglichst allen Fahrsituationen ein stabiles Fahrverhalten zu erreichen.

Die Aufgabe ist mit einer Einzelradaufhängung gemäß Anspruch 1 gelöst. Vorteilhafte Weiterbildungen der Erfindung sind in den abhängigen Ansprüchen definiert.

Gemäß der Erfindung ist eine Einzelradaufhängung eines Rades eines zweispurigen Fahrzeugs geschaffen, mit einem Längslenker, der an einem ersten seiner beiden Endbereiche an einem Fahrzeugaufbau angelenkt ist und an seinem zweiten Endbereich einen Radträger stützt, und einem den Längslenker gegenüber dem Fahrzeugaufbau führenden Scherenlenker, wobei der Längslenker an dem Fahrzeugaufbau in Richtung der Fahrzeuglängsachse festgelegt angelenkt ist und der Scherenlenker an dem Fahrzeugaufbau in Richtung der Fahrzeuglängsachse geringfügig beweglich sowie den Längslenker in Richtung der Fahrzeugquerachse und der Fahrzeughochachse führend angelenkt ist. Dabei ist die geringfügige Beweglichkeit des Scherenlenkers in Richtung der Fahrzeuglängsachse mit einer am Fahrzeugaufbau angelenkten kardanischen Abstützung geschaffen.

Mit der erfindungsgemäßen Einzelradaufhängung ist eine besonders kompakte Bauform geschaffen, die es insbesondere ermöglicht dass die Radkästen des zugehörigen Fahrzeugaufbaus ein sehr kleines Volumen einnehmen. Daher kann beim zugehörigen Fahrzeug der Innenraum großvolumiger gestaltet werden.

Darüber hinaus ergibt sich mit der Einzelradaufhängung gemäß der Erfindung eine vorteilhafte Radführung, insbesondere da der Längslenker an seinem in Fahrtrichtung vorderen Endbereich am Fahrzeugaufbau festgelegt angelenkt ist und von dort aus wie eine Radschwinge nach oben und unten ausschwenken kann. Die Schwenkbewegung wird von dem Scherenlenker geführt, der vergleichsweise klein und kompakt gestaltet sein kann, weil er in Richtung der Fahrzeuglängsachse geringfügig beweglich angelenkt ist und mit dieser Beweglichkeit den durch das Schwenken des Längslenkers bedingten Versatz des Scherenlenkers ausgleichen kann.
Der Längslenker einer solchen Einzelradaufhängung könnte beim Ein- und Ausfedern des zugehörigen Rades aufgrund der zentral wirkenden Gewichtskraft des Fahrzeugaufbaus und der dazu seitlich versetzten Aufstandsfläche des Rades in Richtung der Fahrzeugquerachse nach außen wandern und sich gegebenenfalls um die Fahrzeuglängsachse drehen. Eine dieser Bewegung des Längslenkers entgegenwirkende Führung kann mit einer kardanischen Abstützung geleistet werden, die einerseits am Fahrzeugaufbau und andererseits an dem Scherenlenker angelegt ist. Der Scherenlenker ist dann seinerseits am Längslenker angelenkt.

Eine kardanische Abstützung bzw. Aufhängung ist eine Einrichtung, um einen Gegenstand in zwei zueinander weitgehend rechtwinkligen Achsen drehbar zu lagern. Die erfindungsgemäß verwendete kardanische Abstützung stellt eine sehr kompakte Bauform für die Einzelradaufhängung dar. Sie ermöglicht eine geringfügige Verschiebbarkeit der Anlenkung des Scherenlenkers in Richtung der Fahrzeuglängsachse. Zugleich stützt sie ein Drehmoment des Längslenkers um die Fahrzeuglängsachse ab. Sie verhindert also insbesondere ein Verdrehen des Längslenkers um dessen Längsachse. Dazu ist die kardanische Abstützung vorzugsweise mit zwei Achsen gestaltet, die zueinander weitestgehend senkrecht und im Wesentlichen quer zur Fahrzeuglängsachse ausgerichtet sind. Besonders bevorzugt ist die kardanische Abstützung mit einem kardanischen Ring gestaltet, der mit zwei sich im Wesentlichen in Fahrzeugquerrichtung erstreckenden Armen geringfügig in Fahrzeuglängsrichtung verschiebbar gehalten ist. Der Ring ist dabei im Wesentlichen um die Fahrzeuglängsachse drehfest gelagert. In dem Ring befindet sich eine Querachse, mit der der Scherenlenker angelenkt ist. Der Scherenlenker ist damit um die Fahrzeuglängsachse drehfest gelagert und mit ihm der Längslenker. Dennoch ist der Scherenlenker in Fahrzeuglängsrichtung geringfügig beweglich. Auf diese Weise ist sehr vorteilhaft das Schwenken des erfindungsgemäßen Längslenkers an dem Fahrzeugaufbau in Richtung der Fahrzeugquerachse und auch in Richtung der Fahrzeughochachse geführt.

Die Führung des Längslenkers in Richtung der Fahrzeugquerachse ist dann ebenfalls vorzugsweise mit einer am Fahrzeugaufbau angelenkten kardanischen Abstützung geschaffen.

Mit der oben genannten kardanischen Abstützung ist vorzugsweise auch eine Führung des Längslenkers in Richtung der Fahrzeugquerachse geschaffen. Dazu ist besonders bevorzugt eine der beiden Achsen der kardanischen Abstützung im Wesentlichen in Richtung der Fahrzeughochachse ausgerichtet. Mit dieser Achse ist der Scherenlenker und mit ihm der Längslenker seitlich gehalten. Ferner ist vorzugsweise die weitere Achse der kardanischen Abstützung im Wesentlichen in Richtung der Fahrzeugquerachse ausgerichtet. Mit dieser Achse kann der daran angelenkte Scherenlenker auf und ab schwenken und auch dabei den Längslenker führen.

Die kardanische Abstützung ist mit anderen Worten vorzugsweise am Scherenlenker mittels einer Schwenkachse abgestützt, die sich im Wesentlichen in Richtung der Fahrzeugquerachse erstreckt. Der Winkel dieser Schwenkachse ist zur Fahrzeugquerachse vorteilhaft in der Ebene Fahrzeuglängsachse/Fahrzeugquerachse in einem Bereich zwischen -10° (Winkel von der Fahrzeugquerachse nach hinten gerichtet) und +6° (Winkel von der Fahrzeugquerachse nach vorne gerichtet), bevorzugt zwischen -5° und +1°, besonders bevorzugt zwischen -3° und -1° gewählt. Ferner ist der Winkel dieser Schwenkachse zur Fahrzeugquerachse vorzugsweise in der Ebene Fahrzeughochachse/Fahrzeugquerachse in einem Bereich zwischen +15° (Winkel von der Fahrzeugquerachse nach unten gerichtet) und -15° (Winkel von der Fahrzeugquerachse nach oben gerichtet), bevorzugt zwischen -10° und +10°, besonders bevorzugt zwischen -5° und +5° gewählt.

Zur Führung des Längslenkers in Richtung der Fahrzeughochachse ist vorteilhaft der Scherenlenker an einer sich im Wesentlichen in Richtung der Fahrzeugquerachse erstreckenden Schwenkachse an dem Längslenker angelenkt.

Die sich in Richtung der Fahrzeugquerachse erstreckende Schwenkachse des Scherenlenkers am Längslenker nimmt das im Wesentlichen um die Längsachse des Längslenkers wirkende Drehmoment bzw. Kippmoment auf, welches entsteht, wenn der Längslenker einerseits von der Aufstandskraft des Rades und andererseits von der Gewichtskraft des Fahrzeugs belastet wird. Der Winkel dieser Schwenkachse zur Fahrzeugquerachse ist vorteilhaft in der Ebene Fahrzeuglängsachse/Fahrzeugquerachse in einem Bereich zwischen -9° (Winkel von der Fahrzeugquerachse nach hinten gerichtet) und +3° (Winkel von der Fahrzeugquerachse nach vorne gerichtet), bevorzugt zwischen -6° und 0°, besonders bevorzugt zwischen -4° und 0° gewählt. Der Winkel der Schwenkachse zur Fahrzeugquerachse ist vorteilhaft in der Ebene Fahrzeughochachse/Fahrzeugquerachse in einem Bereich zwischen +3° (Winkel von der Fahrzeugquerachse nach unten gerichtet) und -2° (Winkel von der Fahrzeugquerachse nach oben gerichtet), bevorzugt zwischen +2° und -1°, besonders bevorzugt zwischen +1° und 0° gewählt.

Bei den Winkelangaben befinden sich die Scheitelpunkte der Winkel jeweils an der Innenseite des Fahrzeugs und die Winkel sind jeweils zur Außenseite des Fahrzeugs hin geöffnet.

Die Anlenkung des Längslenkers am ersten Endbereich an dem Fahrzeugaufbau ist bevorzugt mittels einer eine elastokinematische Relativbewegung erlaubenden Elastomerlagerung geschaffen.

Die derartige Elastomerlagerung ermöglicht eine Schwenkbewegung des Längslenkers in Richtung der Fahrzeughochachse und ferner zumindest einen geringfügigen Freiheitsgrad in Richtung der Fahrzeugquerachse. In Richtung der Fahrzeuglängsachse ist der Längslenker hingegen für seine Schwenkbewegung auf und ab am Fahrzeug im Wesentlichen ortsfest gehalten.

Ferner ist vorzugsweise bei der Einzelradaufhängung gemäß der Erfindung der Scherenlenker in einer seitlichen Projektion insgesamt innerhalb der Felge angeordnet.

Mit der derartigen Gestaltung des Scherenlenkers ist eine kompakte Bauweise geschaffen, die dennoch eine ausreichende Auslenkung des Längslenkers ermöglicht.

An der erfindungsgemäßen Einzelradaufhängung eines Rades ist vorteilhaft auch ein den Längslenker gegenüber dem Fahrzeugaufbau abstützendes Federelement vorgesehen, wobei das Federelement an dem Längslenker in Richtung der Fahrzeuglängsachse betrachtet im Bereich der Anlenkung des Scherenlenkers am Längslenker angeordnet ist.

Auch mit dieser Gestaltung kann die Bauweise der erfindungsgemäßen Einzelradaufhängung besonders kompakt gehalten werden. Die Gestaltung führt zu einer vorteilhaften Abstützung des Längslenkers, wobei an diesem insbesondere geringe Biegekräfte wirken. Dabei werden die Führung mittels des Scherenlenkers und die Abstützkraft auf einen einzigen Krafteinleitungsbereich am Längslenker konzentriert.

Schließlich ist bei der Einzelradaufhängung gemäß der Erfindung vorzugsweise ein den Längslenker gegenüber dem Fahrzeugaufbau abstützender Dämpfer vorgesehen, der an dem Längslenker in Richtung der Fahrzeuglängsachse betrachtet im Bereich hinter dem Scherenlenker angeordnet ist.

Die derartige Anordnung eines den Längslenker am Fahrzeugaufbau abstützenden Dämpfers führt ebenfalls zu einer sehr kompakten Bauweise. Sie ermöglicht zugleich einen langen Bewegungsweg für den Dämpfer und erlaubt den Einsatz eines besonders schlanken Dämpferkörpers.

Nachfolgend wird ein Ausführungsbeispiel der erfindungsgemäßen Lösung anhand der beigefügten schematischen Zeichnungen näher erläutert. Es zeigt:
- Fig. 1: eine erste perspektivische Ansicht einer erfindungsgemäßen Einzelradaufhängung,
- Fig. 2: eine zweite perspektivische Ansicht der Einzelradaufhängung gemäß Fig. 1,
- Fig. 3: eine Seitenansicht von innen der Einzelradaufhängung gemäß Fig. 1,
- Fig. 4: eine Vorderansicht der Einzelradaufhängung gemäß Fig. 1,
- Fig. 5: eine Draufsicht der Einzelradaufhängung gemäß Fig. 1,
- Fig. 6: eine Rückansicht der Einzelradaufhängung gemäß Fig. 1,
- Fig. 7: eine Unteransicht der Einzelradaufhängung gemäß Fig. 1,
- Fig. 8: eine perspektivische Ansicht eines Längslenkers der Einzelradaufhängung gemäß Fig. 1,
- Fig. 9: eine perspektivische Ansicht eines Scherenlenkers der Einzelradaufhängung gemäß Fig. 1,
- Fig. 10: eine perspektivische Ansicht eines kardanischen Rings der Einzelradaufhängung gemäß Fig. 1 und
- Fig. 11: eine perspektivische Ansicht einer Kardanstütze der Einzelradaufhängung gemäß Fig. 1.

In den Figuren sind Ausführungsbeispiele einer Einzelradaufhängung 10 für ein Rad 12 eines weiter nicht dargestellten Personenkraftwagens dargestellt. Das Rad 12 umfasst einen Reifen 14, der auf einer Felge 16 aufgezogen ist. Der Personenkraftwagen weist dabei einen Fahrzeugaufbau bzw. einer Karosserie (nicht dargestellt) auf, bewegt sich in einer mit einem Pfeil veranschaulichten Hauptfahrtrichtung 18 und erstreckt sich entlang einer Fahrzeuglängsachse 20, einer Fahrzeugquerachse 22 und einer Fahrzeughochachse 24.

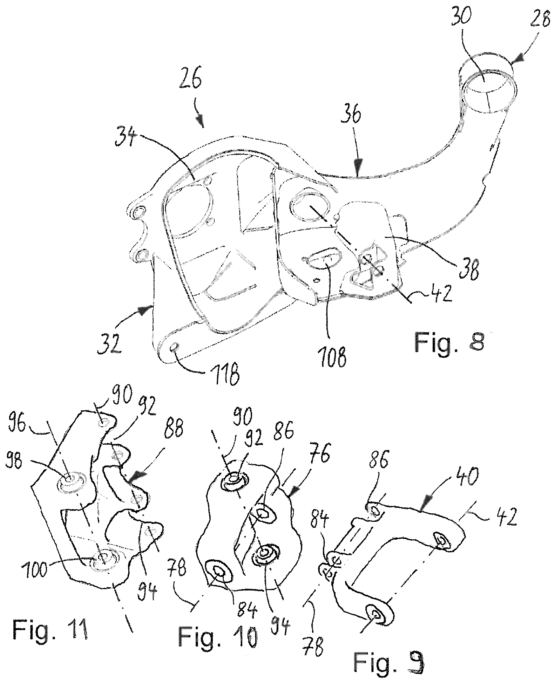

Die Einzelradaufhängung 10 ist mit einem Längslenker 26 gestaltet (siehe insbesondere Fig. 8 und 19), der im Wesentlichen stabförmig bzw. pfannenförmig gestaltet ist und dabei einen in Hauptfahrtrichtung vorderen Endbereich 28 aufweist. Am vorderen Endbereich 28 befindet sich ein Lager 30, das als Elastomerlagerung gestaltet ist und mit dem der Längslenker 26 am zugehörigen Fahrzeugaufbau schwenkbar gelagert ist. Die Elastomerlagerung erlaubt eine elastokinematische Schwenkbewegung des Längslenkers 26 insbesondere in Richtung der Fahrzeughochachse 24 und ferner zumindest einen geringfügigen Freiheitsgrad in Richtung der Fahrzeugquerachse 22. In Richtung der Fahrzeuglängsachse 20 ist der Längslenker 26 für seine Schwenkbewegung am Fahrzeugaufbau im Wesentlichen ortsfest gehalten.

An einem zugehörigen hinteren Endbereich 32 des Längslenkers 26 ist ein Radträger 34 ausgebildet, mit dem das Rad 12 drehbar um eine Radachse (nicht dargestellt) gelagert ist, die sich im Wesentlichen parallel zur Fahrzeugquerachse 22 erstreckt. An einem zwischen dem vorderen Endbereich 28 und dem hinteren Endbereich 32 liegenden Mittelbereich 36 des Längslenkers 26, der auch als Hauptarm des Längslenkers 26 bezeichnet werden kann, befindet sich von diesem seitlich abstehend ein Seitenarm 38.

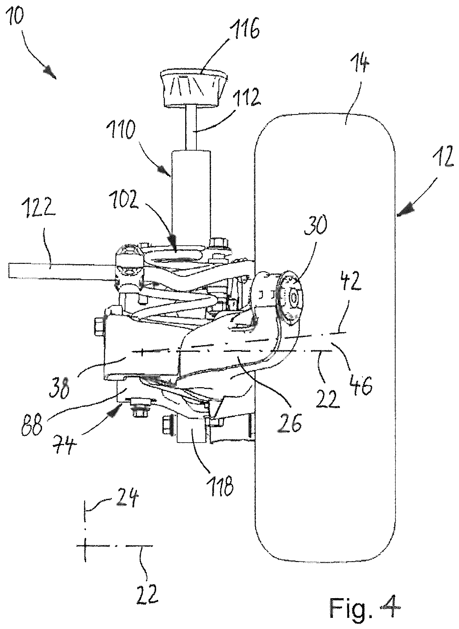

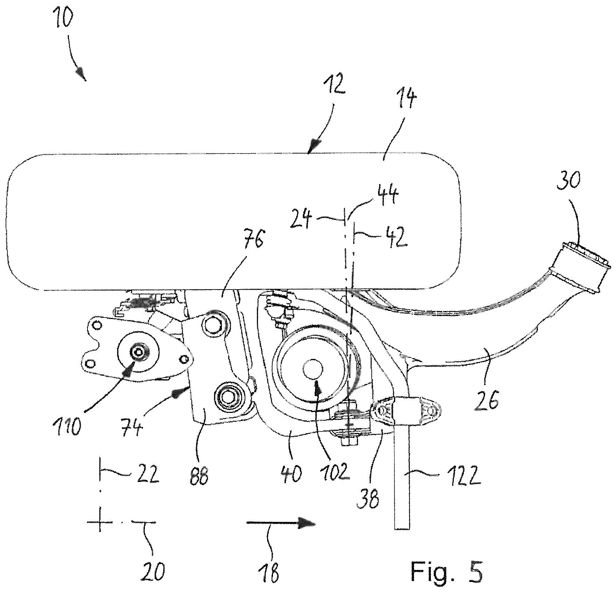

An dem Seitenarm 38 ist ein Scherenlenker 40 (siehe insbesondere Fig. 9) mittels einer Schwenkachse 42 angelenkt. Die Schwenkachse 42 erstreckt sich in einem Winkel 44 (siehe Fig. 5) von -3° zur Fahrzeugquerachse 22 in der von der Fahrzeuglängsachse 20 und der Fahrzeugquerachse 22 gebildeten Ebene. Ferner erstreckt sich die Schwenkachse 42 in einem Winkel 46 (siehe Fig. 4) von +1° zur Fahrzeugquerachse 22 in der von der Fahrzeughochachse 24 und der Fahrzeugquerachse 22 gebildeten Ebene. Die Schwenkachse 42 ist mit einem ersten Schwenkpunkt 48 des Scherenlenkers 40 gebildet, der als eine Achslagerung direkt am Hauptarm des Längslenkers 26 ausgebildet ist. Daneben ist die Schenkachse 42 mit einem zweiten Schwenkpunkt 50 definiert, der ebenfalls als eine Achslagerung am Endbereich des Seitenarms 38 ausgeformt ist.

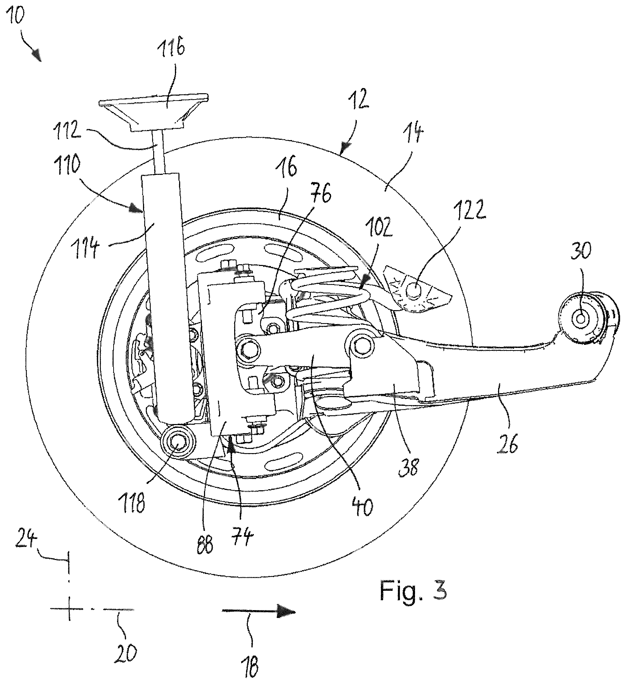

Der derart am Längslenker 26 angelenkte Scherenlenker 40 ist an dem Fahrzeugaufbau in Richtung der Fahrzeuglängsachse 20 geringfügig beweglich und dennoch den Längslenker 26 in Richtung der Fahrzeugquerachse 22 und der Fahrzeughochachse 24 führend angelenkt. Zugleich ist der Scherenlenker 40 so angelenkt, dass er in einer seitlichen Projektion (also in Projektion in Richtung der Fahrzeugquerachse 22, siehe insbesondere Fig. 3) am Längslenker 26 innerhalb der Felge 16 angelenkt ist. Dabei ist der Scherenlenker 40 selbst ferner so gestaltet, dass er in der seitlichen Projektion insgesamt innerhalb der Felge 16 angeordnet ist.

Auf diese Weise ist eine besonders kompakte Bauform geschaffen, die es insbesondere ermöglicht am zugehörigen Fahrzeugaufbau einen sehr kleinen Radkasten vorzusehen. Darüber hinaus ergibt sich mit dieser Gestaltung und Anlenkung des Scherenlenkers 40 eine vorteilhafte Radführung, insbesondere da der Längslenker 26 an seinem in Hauptfahrtrichtung 18 vorderen Endbereich 28 am Fahrzeugaufbau festgelegt angelenkt ist und von dort aus wie eine Radschwinge in Richtung der Fahrzeughochachse 24 ausschwenken kann. Diese Schwenkbewegung wird von dem Scherenlenker 40 geführt, der zugleich sehr klein und kompakt gestaltet ist. Damit ist der Im Zentrum des Rades 12 zur Verfügung stehenden Raum optimal genutzt. Mit der kompakten Bauweise ergeben sich auch kurze Hebellängen, die zu besonders geringen Querkrafteinwirkungen führen.

Damit der Scherenlenker 40 in Richtung der Fahrzeuglängsachse 20 geringfügig beweglich gelagert ist, ist bei der Einzelradaufhängung 10 eine am Fahrzeugaufbau angelenkte kardanische Abstützung 74 geschaffen. Die kardanische Abstützung 74 stützt zugleich jenes Drehmoment des Längslenkers 26 um die Fahrzeuglängsachse 20 ab, das dieser aufgrund der an ihm wirkenden Kräfte erfährt, und führt den Längslenker 26 dabei in Richtung der Fahrzeugquerachse 22.

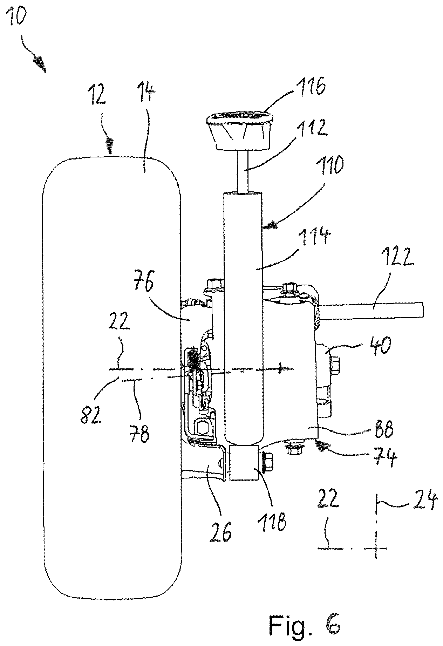

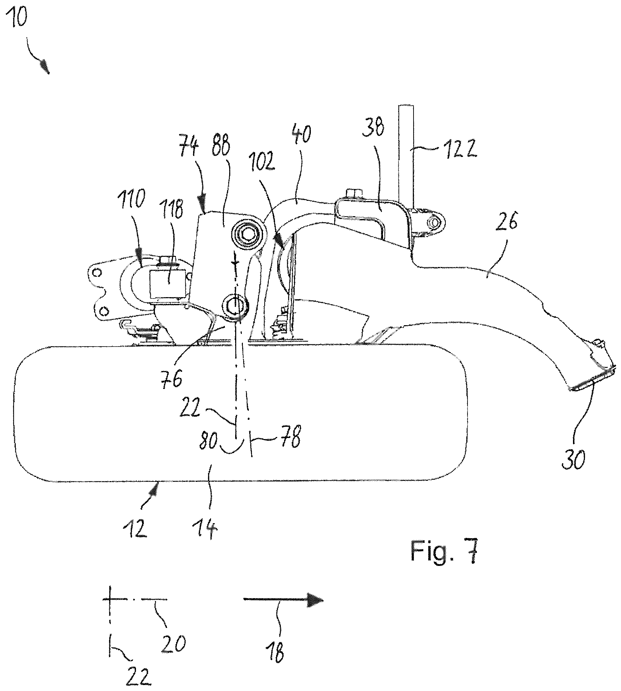

Die kardanische Abstützung 74 ist mit einem kardanischen Ring 76 gestaltet, der mit einer Schwenkachse 78 an dem zugehörigen Scherenlenker 40 angelenkt ist. Die Schwenkachse 78 erstreckt sich in einem Winkel 80 (siehe Fig. 7) von -3,5° zur Fahrzeugquerachse 22 in der von der Fahrzeuglängsachse 20 und der Fahrzeugquerachse 22 gebildeten Ebene. Ferner erstreckt sich die Schwenkachse 78 in einem Winkel 82 (siehe Fig. 6) von -2° zur Fahrzeugquerachse 22 in der von der Fahrzeughochachse 24 und der Fahrzeugquerachse 22 gebildeten Ebene. Dabei ist am kardanischen Ring 76 an einer Seite ein erster Schwenkpunkt 84 vorgesehen, der als Achslagerung gestaltet ist und gegenüberliegend ein zweiter, ebenfalls als Achslagerung gestalteter Schwenkpunkt 86. Zum Abstützen des kardanischen Rings 76 gegenüber dem Fahrzeugaufbau ist eine Kardanstütze 88 vorgesehen, die sich im Wesentlichen in Form einer rechteckigen Platte in der von der Fahrzeughochachse 24 und der Fahrzeugquerachse 22 gebildeten Ebene erstreckt. Die Kardanstütze 88 ist mittels einer Schwenkachse 90 an dem kardanischen Ring 76 angelenkt, die sich im Wesentlichen in Richtung der Fahrzeughochachse 24 und damit im Wesentlichen im rechten Winkel zur Schwenkachse 78 erstreckt. Dabei weist die Kardanstütze 88 einen ersten Schwenkpunkt 92 und einen zweiten Schwenkpunkt 94 auf.

Am Fahrzeugaufbau ist die Kardanstütze 88 mit einer Schwenkachse 96 schwenkbar angelenkt, die sich ebenfalls im Wesentlichen in Richtung der Fahrzeughochachse 24 erstreckt und von einem dritten Schwenkpunkt 98 sowie einem vierten Schwenkpunkt 100 gebildet ist. Die Schwenkpunkte 98 und 100 sind beide als Elastomerlagerung gestaltet.

Die soweit erläuterte kardanische Abstützung ist in der seitlichen Projektion insgesamt innerhalb der zugehörigen Felge 16 angeordnet. Auf diese Weise ist eine sehr kompakte Bauweise geschaffen, die dennoch eine präzise Führung bei gleichzeitig ausreichender Auslenkung des Längslenkers 26 ermöglicht.

An der dargestellten Einzelradaufhängung 10 ist ferner ein Federelement 102 vorgesehen, das mit einer Schraubenfeder 104 gebildet ist. Das Federelement 102 ist an dem zugehörigen Längslenker 26 in Richtung der Fahrzeuglängsachse 20 betrachtet im Bereich der Anlenkung des Scherenlenkers 40 angeordnet. In Richtung der Fahrzeuglängsachse 20 betrachtet also im Mittelbereich 36 bzw. auf Höhe des Seitenarms 38 des Längslenkers 26. Mit dieser Gestaltung ist die Bauweise der jeweiligen Einzelradaufhängung 10 besonders kompakt gehalten und der Längslenker 26 ist besonders vorteilhaft mittig abgestützt, so dass geringe Biegekräfte wirken. Die Schraubenfeder 104 kann dabei derart bemessen werden, dass das Federelement 102 sehr kompakt in der seitlichen Projektion insgesamt innerhalb der Felge 16 angeordnet ist (siehe Fig. 3).

Zur Dämpfung der Federbewegung des Längslenkers 26 ist an der dargestellten Einzelradaufhängung 10 ein Dämpfer 110 vorgesehen, der mit einem Dämpferkolben 112 und einem Dämpferzylinder 114 gebildet ist. Der Dämpferkolben 112 ist in dem Dämpferzylinder 114 verschiebbar gelagert und dabei mittels einer oberen Anlenkung 116 am Fahrzeugaufbau angelenkt, während der Dämpferzylinder 114 mit einer unteren Anlenkung 118 an dem hintersten Endbereich des Längslenkers 26 angelenkt ist. Der Dämpfer 110 befindet sich damit in Richtung der Fahrzeuglängsachse betrachtet in für den Hubweg des Dämpferkolbens 112 besonders vorteilhafter Weise im Bereich hinter dem Scherenlenker 40.

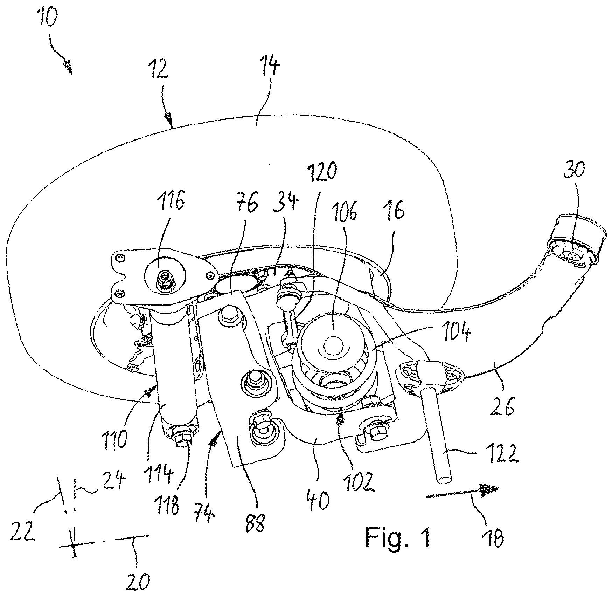

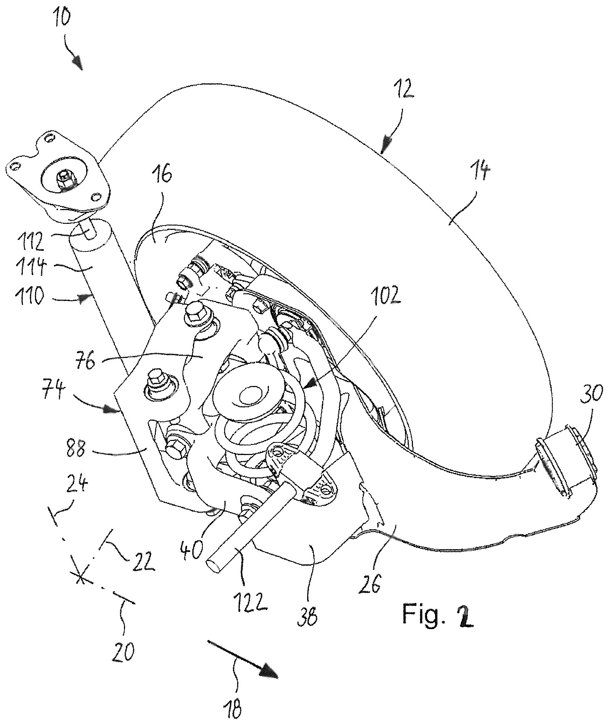

Abschließend sei angemerkt, dass am Längslenker 26 gemäß den Fig. 1 bis 11 im Bereich der Anlenkung des Scherenlenkers 40 sowie des Federelements 102 ferner mittels einer Pendelstange 120 ein Drehstabilisator 122 angelenkt sein kann.

## Patentansprüche

1. Einzelradaufhängung (10) eines Rades (12) eines zweispurigen Fahrzeugs mit einem Längslenker (26), der an einem ersten (28) seiner beiden Endbereiche (28, 32) an einem Fahrzeugaufbau angelenkt ist und an seinem zweiten Endbereich (32) einen Radträger (34) stützt, und mit einem den Längslenker (26) gegenüber dem Fahrzeugaufbau führenden Scherenlenker (40),
wobei der Längslenker (26) an dem Fahrzeugaufbau in Richtung der Fahrzeuglängsachse (20) festgelegt angelenkt ist und der Scherenlenker (40) an dem Fahrzeugaufbau in Richtung der Fahrzeuglängsachse (20) geringfügig beweglich sowie den Längslenker (26) in Richtung der Fahrzeugquerachse (22) und der Fahrzeughochachse (24) führend angelenkt ist,
**dadurch gekennzeichnet, dass** die geringfügige Beweglichkeit des Scherenlenkers (40) in Richtung der Fahrzeuglängsachse (20) mit einer am Fahrzeugaufbau angelenkten kardanischen Abstützung (74) geschaffen ist.

2. Einzelradaufhängung eines Rades nach Anspruch 1, bei der zur Führung des Längslenkers (26) in Richtung der Fahrzeughochachse (24) der Scherenlenker (40) an einer sich im Wesentlichen in Richtung der Fahrzeugquerachse (22) erstreckenden Schwenkachse (42) an dem Längslenker (26) angelenkt ist.

3. Einzelradaufhängung eines Rades nach einem der Ansprüche 1 bis 2, bei der die Anlenkung des Längslenkers (26) am ersten Endbereich (28) an dem Fahrzeugaufbau mittels einer eine elastokinematische Relativbewegung erlaubenden Elastomerlagerung (30) geschaffen ist.

4. Einzelradaufhängung eines Rades nach einem der vorangegangenen Ansprüche, wobei der Scherenlenker (40) in einer seitlichen Projektion insgesamt innerhalb der Felge (16) des Rades (12) angeordnet ist.

5. Einzelradaufhängung eines Rades nach einem der vorangegangenen Ansprüche mit einem den Längslenker (26) gegenüber dem Fahrzeugaufbau abstützenden Federelement (102), wobei das Federelement (102) an dem Längslenker (26) in Richtung der Fahrzeuglängsachse (20) betrachtet im Bereich der Anlenkung des Scherenlenkers (40) am Längslenker (26) angeordnet ist.

6. Einzelradaufhängung eines Rades nach einem der vorangegangenen Ansprüche mit einem den Längslenker (26) gegenüber dem Fahrzeugaufbau abstützenden Dämpfer (110), der an dem Längslenker (26) in Richtung der Fahrzeuglängsachse (20) betrachtet im Bereich hinter dem Scherenlenker (40) angeordnet ist.

## Claims

1. An independent suspension (10) of a wheel (12) of a two-track vehicle, comprising a trailing arm (26), which is hinged at a first (28) of its two end regions (28, 32) to a vehicle body and which at its second end region (32) supports a wheel carrier (34), and comprising a scissor-like arm (40), which guides the trailing arm (26) relative to the vehicle body,
wherein the trailing arm (26) is hinged to the vehicle body so as to be immobile in the direction of the vehicle longitudinal axis (20) and the scissor-like arm (40) is hinged to the vehicle body so as to be only slightly mobile in the direction of the vehicle longitudinal axis (20) and so as to guide the trailing arm (26) in the direction of the vehicle transverse axis (22) and the vehicle vertical axis (24),
**characterised in that** the slight movability of the scissor-like arm (40) in the direction of the vehicle longitudinal axis (20) is created with a cardanic support (74) hinged to the vehicle body.

2. An independent suspension of a wheel according to claim 1, in which, in order to guide the trailing arm (26) in the direction of the vehicle vertical axis (24), the scissor-like arm (40) is hinged to the trailing arm (26) at a pivot pin (42) extending substantially in the direction of the vehicle transverse axis (22).

3. An independent suspension of a wheel according to either one of claims 1 or 2, in which the hinging of the trailing arm (26) at the first end region (28) to the vehicle body is created by means of an elastomer bearing (30) allowing an elastokinematic relative movement.

4. An independent suspension of a wheel according to any one of the preceding claims, wherein the scissor-like arm (40) is arranged on the whole within the rim (16) of the wheel (12) in a lateral projection.

5. An independent suspension of a wheel according to any one of the preceding claims, comprising a spring element (102) supporting the trailing arm (26) relative to the vehicle body, wherein the spring element (102) is arranged on the trailing arm (26) in the region of the hinging of the scissor-like arm (40) to the trailing arm (26) as considered in the direction of the vehicle longitudinal axis (20).

6. An independent suspension of a wheel according to any one of the preceding claims, comprising a damper (110), which supports the trailing arm (26) relative to the vehicle body and which is arranged on the trailing arm (26) in the region behind the scissor-like arm (40) as considered in the direction of the vehicle longitudinal axis (20).

## Revendications

1. Suspension de roue indépendante (10) d'une roue (12) d'un véhicule à deux lignes de roues comprenant un bras de suspension longitudinal (26) qui est articulé au niveau d'une première (28) de ses deux zones d'extrémité (28, 32) sur la carrosserie du véhicule, et porte un support de roue (34), au niveau de sa seconde zone d'extrémité (32), ainsi qu'un bras de suspension déployable (40) qui guide le bras de suspension longitudinal (26) par rapport à la carrosserie du véhicule,
le bras de suspension longitudinal (26) étant articulé sur la carrosserie du véhicule solidairement en direction de l'axe longitudinal (20) de celui-ci et le bras de suspension déployable (40) étant articulé sur la carrosserie du véhicule en pouvant un peu se déplacer en direction de l'axe longitudinal (20) de celui-ci, et en guidant le bras de suspension longitudinal (26) en direction de l'axe transversal (22) du véhicule et de l'axe vertical (24) de celui-ci,
**caractérisé en ce que**
la faible liberté de mouvement du bras de suspension déployable (40) en direction de l'axe longitudinal (20) du véhicule, est obtenue au moyen d'un support à la Cardan (74) articulé sur la carrosserie du véhicule.

2. Suspension de roue indépendante conforme à la revendication 1, dans laquelle, pour permettre de guider le bras de suspension longitudinal (26) en direction de l'axe vertical (24) du véhicule, le bras de suspension déployable (40) est articulé sur le bras de suspension longitudinal (26) autour d'un axe de pivotement (42) s'étendant essentiellement dans la direction de l'axe transversal (22) du véhicule.

3. Suspension de roue indépendante conforme à l'une des revendications 1 et 2, dans laquelle, l'articulation du bras de suspension longitudinal (26) sur la carrosserie du véhicule au niveau de sa première zone d'extrémité (28) est obtenue au moyen d'un palier élastomère (30) permettant un mouvement relatif élastocinématique.

4. Suspension de roue indépendante conforme à l'une des revendications précédentes, dans laquelle le bras de suspension déployable (40) est situé en totalité à la partie interne de la jante (16) de la roue (12) en projection latérale.

5. Suspension de roue indépendante conforme à l'une des revendications précédentes, comprenant un élément de ressort (102) portant le bras de suspension longitudinal (26) par rapport à la carrosserie du véhicule, l'élément de ressort (102) étant monté sur le bras de suspension longitudinal (26), en considérant la direction de l'axe longitudinal (20) du véhicule dans la zone de l'articulation du bras de suspension déployable (40) sur le bras de suspension longitudinal (26).

6. Suspension de roue indépendante conforme à l'une des revendications précédentes, comprenant un amortisseur (110) supportant le bras de suspension longitudinal (26) par rapport à la carrosserie du véhicule, qui est monté sur le bras de suspension longitudinal (26) dans la zone située à l'arriére du bras de suspension déployable (40) en considérant la direction de l'axe longitudinal (20) du véhicule.
